# EUROPÄISCHE PATENTANMELDUNG

(11) **EP 2 218 912 A2**
(43) Veröffentlichungstag der Anmeldung: **18.08.2010**
(21) Anmeldenummer: 10151412.3
(22) Anmeldetag: 22.01.2010
(51) Int. Cl.: F03D 11/00

(54) **Qualitätsprüfung für Rotorblätter einer Windenergieanlage**

(30) Priorität: 17.02.2009 DE 102009009272
(71) Anmelder: Siemens Aktiengesellschaft, 80333 München (DE)
(72) Erfinder: Bosselmann, Thomas, 91080, Marloffstein (DE); Hertsch, Hagen, 91056, Erlangen (DE); Kaiser, Joachim, 91056, Erlangen (DE); Theune, Nils-Michael, 90522, Oberasbach (DE); Willsch, Michael, 07745, Jena (DE)

(57) **Zusammenfassung**

Zur Prüfung, ob die Glas- oder Kohlenstofffasermatten in einem Rotorblatt für eine Windenergieanlage nach der Fertigstellung Verwerfungen, Aufwölbungen oder Falten aufweisen, wird ein Punkt- oder Linienlaser schräg auf die Oberfläche des Rotorblatts gerichtet. Aus der Position des reflektierten Strahls, insbesondere eines Anteils des Strahls, der unterhalb der Oberfläche des Rotorblatts an der Matte reflektiert wird, wird auf die Lage und Form der Matte geschlossen und zerstörungsfrei ermittelt werden, ob Verwerfungen, Aufwölbungen oder Falten vorliegen.

## Beschreibung

Die Erfindung betrifft ein Verfahren sowie eine Vorrichtung zur Überprüfung der Herstellungsqualität eines Rotorblatts einer Windenergieanlage. Insbesondere werden dabei nicht von außen sichtbare Eigenschaften des Rotorblatts betrachtet.

Die Eigenschaften der Rotorblätter einer Windenergieanlage sind wesentlich für den Ertrag der Windenergieanlage. Heute werden Rotorblätter in der Hauptsache aus glasfaserverstärktem Kunststoff (GfK) hergestellt. Die verwendeten Längen der Rotorblätter reichen dabei von wenigen Metern bis zu 60 m und mehr. Die beim Betrieb auftretenden erheblichen Längskräfte werden durch einen oder mehrere Gurte oder Bahnen aus Glas- oder Kohlenstofffasern - im Folgenden als Fasermatten bezeichnet - aufgenommen. Die Gurte bestehen entweder aus Endlosfasern, den sog. Rovings, oder sind unidirektionale Gelege.

Bei der Herstellung werden die Bahnen aus Glas- oder Kohlenstofffaser in eine Negativform für ein Rotorblatt eingelegt. Dann wird die Negativform mit einem Epoxidharz ausgegossen und das Harz ausgehärtet.

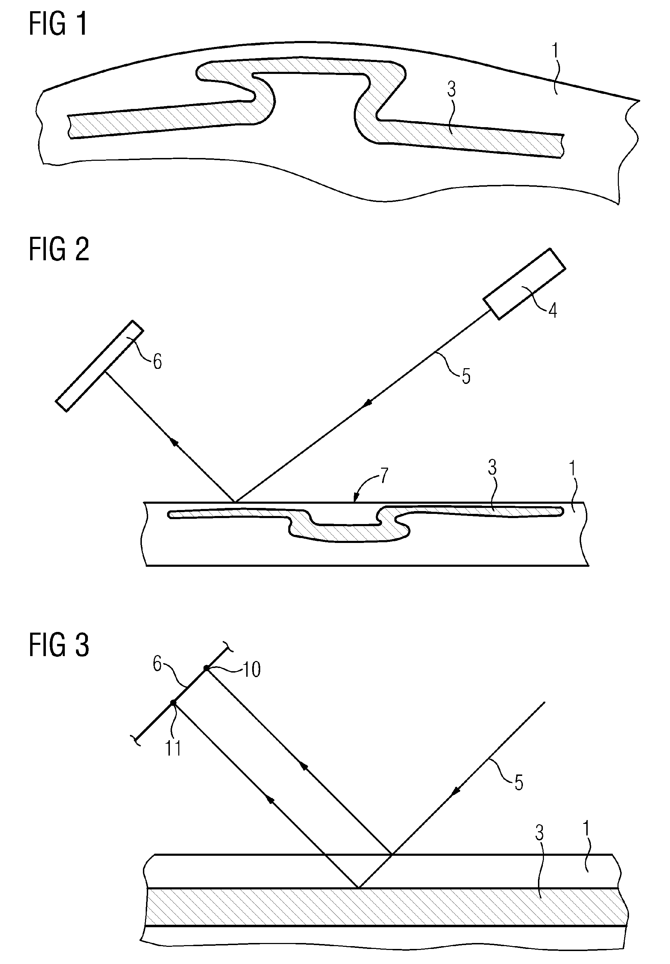

Idealerweise liegen die Fasermatten nach der Fertigstellung des Rotorblatts glatt im Rotorblatt eingebettet. Tatsächlich aber weisen die Bahnen aber Aufwölbungen und Falten auf. Eine solche Omega-förmige Auffaltung ist in Fig. 1 schematisch dargestellt. Im Bereich einer solchen Auffaltung ist die Aufnahme der Längskräfte, die auf das Rotorblatt wirken, nicht in der gewünschten Weise gewährleistet. Allgemein gesagt schwächen die Aufwölbungen und Falten die für das Rotorblatt gewünschte und vorgesehene Steifigkeit und Elastizität, insbesondere in der Längsrichtung des Rotorblatts, also entlang seiner längsten Erstreckung. Diese Fehler im Aufbau des Rotorblatts können zu plötzlichem Versagen oder allgemein formuliert zu einer Verringerung der Lebensdauer des Rotorblatts führen.

Das undurchsichtige Material von Rotorblättern erlaubt im Allgemeinen keine visuelle Inspektion eines fertig gestellten Rotorblatts. Aufgabe der vorliegenden Erfindung ist es daher, eine Vorrichtung und ein Verfahren zur Überprüfung der Herstellungsqualität für ein Rotorblatt einer Windenergieanlage anzugeben, mit der zerstörungsfrei und in einfacher Weise Verwerfungen von im Rotorblatt eingebetteten Fasermatten feststellbar sind.

Die Aufgabe wird hinsichtlich der Vorrichtung durch eine Vorrichtung mit den Merkmalen von Anspruch 1 gelöst. Hinsichtlich des Verfahrens wird die Aufgabe durch ein Verfahren mit den Merkmalen von Anspruch 5 gelöst. Die abhängigen Ansprüche betreffen vorteilhafte Ausgestaltungen der Erfindung.

Die erfindungsgemäße Vorrichtung zur Überprüfung der Herstellungsqualität für ein Rotorblatt einer Windenergieanlage weist wenigstens eine Lichtquelle zur Emission von Licht auf. Bevorzugt handelt es sich bei der Lichtquelle um eine Laserlichtquelle, beispielsweise eine Laserdiode. In diesem Fall handelt es sich bei dem emittierten Licht um Laserlicht mit seinen bekannten Eigenschaften. Es kann aber auch beispielsweise eine Leuchtdiode verwendet werden. Weiterhin umfasst die Vorrichtung eine Detektionseinrichtung zur Detektion des Lichts. Die Detektionseinrichtung ist dabei positionssensitiv, das heißt sie besitzt eine Ortsauflösung in wenigstens einer Dimension. Mit anderen Worten ist die Detektionseinrichtung in der Lage, die Position eines eintreffenden Lichtstrahls in wenigstens einer Dimension zu ermitteln. Als Detektionseinrichtungen kommen hierfür beispielsweise eine Photodiodenzeile oder eine Kamera, beispielsweise basierend auf einem CCD. Die Detektionseinrichtung ist außerhalb des Lichtwegs des Lichts angeordnet. In anderen Worten trifft das Licht aus der Lichtquelle nicht die Detektionseinrichtung, sofern es nicht abgelenkt wird.

In dem erfindungsgemäßen Verfahren zur Überprüfung der Herstellungsqualität für ein Rotorblatt einer Windenergieanlage wird das Rotorblatt aus einem von der Senkrechten zu seiner Oberfläche verschiedenen Winkel mit Licht bestrahlt. Vom Rotorblatt reflektiertes Licht wird von einem Detektor aufgenommen. Dabei wird die Position von unter der Oberfläche des Rotorblatts an einer Fasermatte reflektiertem Licht am Detektor ermittelt und aus der Position die Lage der Fasermatte ermittelt. Dabei wird zweckmäßig von der Position am Detektor auf die Tiefe der Reflexion unter der Oberfläche des Rotorblatts geschlossen.

Um diesen Schluss zu vereinfachen, ist es vorteilhaft, wenn neben der Position von unter der Oberfläche des Rotorblatts an einer Fasermatte reflektiertem Licht auch eine Grundposition ermittelt wird, wobei die Grundposition die Position von direkt an der Oberfläche des Rotorblatts reflektiertem Licht am Detektor ist. Die Position kann dann mit der Grundposition verglichen werden, um daraus die Tiefe unter der Oberfläche zu ermitteln, in der die Reflexion stattgefunden hat.

In einer vorteilhaften Ausgestaltung der Erfindung ist die Lichtquelle eine Linienlichtquelle. Mit anderen Worten emittiert die Lichtquelle einen Lichtstrahl, der eine Ebene überstreicht. Hierzu kann neben einer Lichtquelle, die direkt solches Licht erzeugt, auch eine Punktlichtquelle mit einem zusätzlichen optischen Element, das für eine Strahlaufweitung sorgt, verwendet werden. Mit einer solchen Lichtquelle kann vorteilhaft eine Mehrzahl von Punkten der Oberfläche des Rotorblatts gleichzeitig betrachtet werden. Hierfür ist es wiederum sehr vorteilhaft, wenn die Detektionseinrichtung ein Flächensensor ist. Hierfür kommen beispielsweise Kameras, insbesondere ein CCD (charge coupled device), in Frage. Ein Flächensensor ist in der Lage, die Reflexion des Lichts von der Linienlichtquelle an der Oberfläche und auch die Reflexionen der Lichtlinie von unter der Oberfläche des Rotorblatts gleichzeitig aufzunehmen.

Es ist zweckmäßig, wenn die Ermittlung der Position des reflektierten Lichts nicht nur an einem Punkt oder mit einer Linie vorgenommen wird, sondern über einen ganzen Bereich hinweg. Dadurch ist es nämlich möglich, die Lage der Fasermatte in dem Bereich zu ermitteln. Da nicht von vornherein bekannt ist, wo die Fasermatte eine Falte oder Verwerfung aufweisen könnte, ist es zweckmäßig, das Rotorblatt überall dort einer Prüfung zu unterziehen, wo sich eine Fasermatte unter der Oberfläche befindet.

Hierzu ist es also von Vorteil, wenn ein Flächenanteil der Oberfläche des Rotorblatts mit der Vorrichtung bzw. dem Verfahren überprüft wird. Zweckmäßig werden dafür das Rotorblatt und die Vorrichtung relativ zueinander verschoben, so dass im Laufe der Zeit der Lichtstrahl den zu untersuchenden Flächenanteil überstreicht. Für die relative Verschiebung gibt es verschiedene Alternativen.

In einer Ausgestaltung wird das Rotorblatt ortsfest gelassen und die Vorrichtung über eine Verschiebeeinheit bewegt. Dabei kann beispielsweise über eine dreidimensionale Verschiebeeinheit auch der Abstand zur Oberfläche des Rotorblatts konstant gehalten werden. Vorteilhaft ist es dabei auch, wenn die Vorrichtung zusätzlich zur reinen Verschiebung gekippt werden kann, um die Winkelverhältnisse unter Berücksichtigung der gekrümmten Oberfläche des Rotorblatts konstant zu halten.

In einer Alternative wird das Rotorblatt mittels einer Verschiebeeinheit bewegt, während die Vorrichtung ortsfest bleibt. Diese Alternative ist beispielsweise dann vorteilhaft, wenn eine ausreichend messbare Grundposition durch die Reflexion des Lichts an der Oberfläche des Rotorblatts selbst vorhanden ist. In diesem Fall kann nämlich die Tiefe von anderweitigen Reflexionen auch dann zuverlässig bestimmt werden, wenn sich beispielsweise der Abstand der Vorrichtung von der Oberfläche ändert.

In einer dritten Alternative wird das Rotorblatt in einer Verschiebe- und Dreheinheit geführt, die eine Verschiebung in zweckmäßig der Längsrichtung erlaubt und gleichzeitig eine Drehung um die Längsachse. In dieser Alternative kann das Rotorblatt analog zu einem Ultraschall-Rollradsensor an jedem Punkt der Oberfläche verhältnismäßig einfach untersucht werden. Dabei ist beispielsweise vorstellbar, dass bei Verwendung einer Linienlichtquelle diese so angeordnet wird, dass die Lichtlinie auf dem Rotorblatt senkrecht zur Längsrichtung auftrifft. Wird das Rotorblatt mit einer konstanten Geschwindigkeit gedreht und dabei ebenfalls mit einer konstanten Geschwindigkeit in der Längsrichtung bewegt - dies kann natürlich auch schrittweise geschehen - so kann die Oberfläche des Rotorblatts nahezu lückenlos untersucht werden, da die Lichtlinie die ganze Oberfläche spiralförmig überstreicht.

Bevorzugte, jedoch keinesfalls einschränkende Ausführungsbeispiele für die Erfindung werden nunmehr anhand der Zeichnung näher erläutert. Dabei sind die Merkmale schematisiert dargestellt und sich entsprechende Merkmale sind mit gleichen Bezugszeichen markiert. Die Figuren zeigen dabei im Einzelnen
- Figur 1: eine Omega-förmige Verwerfung einer Fasermatte in einem Rotorblatt,
- Figur 2: ein System zur Prüfung der Lage von Fasermatten im Rotorblatt,
- Figur 3: den Verlauf reflektierter Strahlen bei idealer Lage der Fasermatte,
- Figur 4: den Verlauf reflektierter Strahlen in der Nähe einer Verwerfung der Fasermatte,
- Figur 5: eine Schema zur Untersuchung der gesamten Oberfläche des Rotorblatts,
- Figur 6: ein weiteres Schema zur Untersuchung der gesamten Oberfläche des Rotorblatts und
- Figur 7: eine Ausführungsmöglichkeit mit einem Linienlaser.

Figur 1 zeigt im Querschnitt ein Rotorblatt 1 im fertig gestellten Zustand mit einer Verwerfung einer Fasermatte 3. Die Verwerfung ist Omega-förmig. Idealerweise müsste die Fasermatte 3 einen im Wesentlichen geraden Verlauf aufweisen, um eine ideale Aufnahme der Längskräfte auf das Rotorblatt 1 zu gewährleisten. Die Verwerfung verhindert speziell im Bereich der Abweichung vom geraden Verlauf die zu erzielende Steifigkeit und Elastizität für das Rotorblatt 1, sodass die Lebensdauer des Rotorblatts 1 verkürzt wird. Unter die Längskräfte fallen beispielsweise die Kräfte, die im Betrieb der Windenergieanlage durch den auf das Rotorblatt 1 drückenden Wind entstehen.

Die Verwerfung ist bei einem fertig gestellten Rotorblatt 1 nicht visuell con außen zu erkennen, da das Material für das Rotorblatt 1 - Epoxidharz - nicht ausreichend transparent ist. Um eine Verwerfung wie in Figur 1 oder andere Verformungen der Fasermatte 3 dennoch feststellen zu können, kann ein System gemäß der Figur 2 zum Einsatz kommen, das als Ausführungsbeispiel für die Erfindung dient.

In diesem Ausführungsbeispiel wird die Oberfläche 7 des Rotorblatts 1 in einem Winkel von etwa 45° von einem Punktlaser 4 angestrahlt. Das Laserlicht 5 des Punktlasers 4 wird an der Oberfläche 7 wenigstens teilweise reflektiert und trifft dann auf einen Detektor in Form einer Photodiodenzeile 6. Die Photodiodenzeile 6 ist entsprechend der Reflektion an der Oberfläche 7 des Rotorblatts 1 ebenfalls etwa im 45°-Winkel zu dieser Oberfläche 7 angeordnet, um das reflektierte Laserlicht 5 aufzunehmen. Die Photodiodenzeile 6 ist positionssensitiv, kann also den Ort ermitteln, an dem das reflektierte Laserlicht 5 eintrifft. Dabei ist es zweckmäßig, wenn die Photodiodenzeile 6 wenigstens Positionsänderungen in der Ebene auflösen kann, die vom Laserlicht 5 und dem reflektierten Laserlicht 5 gebildet wird. Dies ermöglicht es nämlich, Positionsänderungen aufzulösen, die dadurch entstehen, dass Teile des Laserlichts 5 in unterschiedlicher Tiefe unter der Oberfläche 7 des Rotorblatts 1 reflektiert werden.

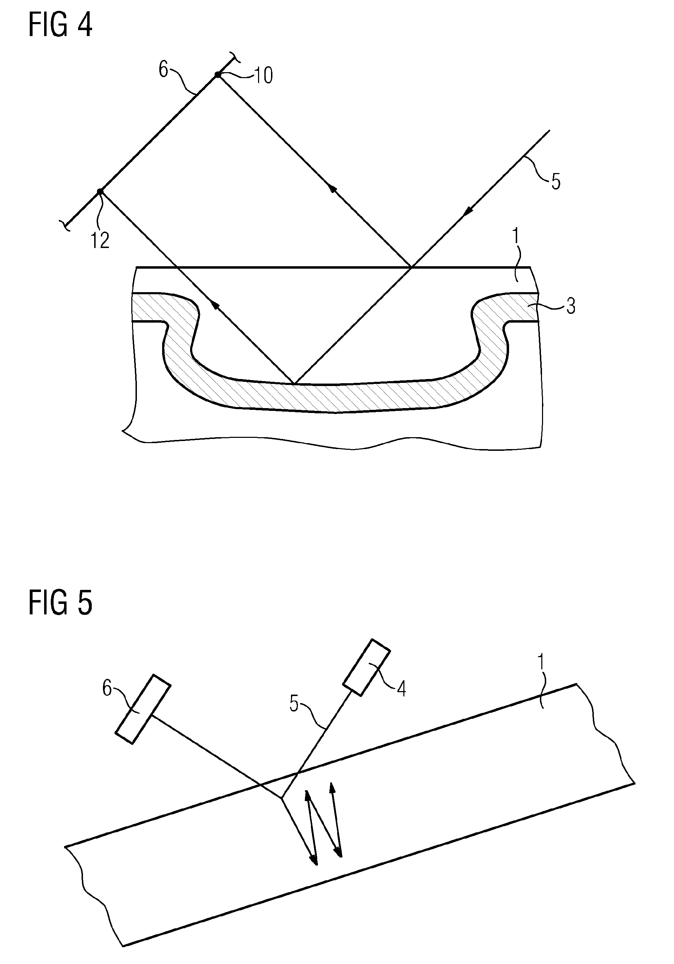

Anhand der Reflexion von Teilen des Laserlichts 5 an der Oberfläche 7 und unter der Oberfläche 7 des Rotorblatts 1 ergeben sich verschiedene Situationen, die in den Figuren 3 und 4 dargestellt sind. Die Intensität der einzelnen reflektierten Anteile kann dabei variieren. So ist es auch möglich, dass eine Reflexion von Laserlicht 5 durch die Oberfläche 7 selbst nicht vorhanden oder zu schwach ist, um in die Auswertung miteinbezogen zu werden.

Figur 3 zeigt die Situation, die sich ergibt, wenn die Fasermatte 3 in einer gewünschten Weise, also im Wesentlichen geradlinig, unter der Oberfläche 7 des Rotorblatts 1 angeordnet ist. Das Laserlicht 5 wird in diesem Ausführungsbeispiel in Teilen direkt an der Oberfläche 7 reflektiert. Dieser Teil des reflektierten Laserlichts 5 trifft an einer Grundposition 10 auf die Photodiodenzeile 6. Ein weiterer Teil des Laserlichts 5 wird erst unter der Oberfläche 7 reflektiert, nämlich an der Fasermatte 3. Dieser Teil des Laserlichts 5 trifft dann nach Austritt aus dem Rotorblatt 1 an einer ersten Position 11 auf die Photodiodenzeile 6. In der Figur 3 ist aus Gründen der Übersicht keine Auswirkung der Brechung dargestellt. Die Brechung des Laserlichts 5 beispielsweise an der Oberfläche 7 des Rotorblatts 1 hat Auswirkungen auf die erste Position 11 und die weiteren Positionen, die sich für das reflektierte Laserlicht 5 ergeben.

Der Abstand der ersten Position 11 von der Grundposition 10 hängt von der Lage der Fasermatte 3 im Rotorblatt 1 ab, insbesondere vom Abstand der Fasermatte 3 von der Oberfläche 7. Es kann also durch eine Betrachtung und Auswertung des Abstands der Positionen 10, 11 ermittelt werden, in welcher Tiefe eine Reflexion stattgefunden hat.

Figur 4 wiederum zeigt die Situation, die sich ergibt, wenn die Fasermatte 3 eine Verwerfung aufweist wie die in Figur 1 gezeigte. Das Laserlicht 5 wird ebenfalls in Teilen direkt an der Oberfläche 7 reflektiert. Dieser Teil des reflektierten Laserlichts 5 trifft wieder an der Grundposition 10 auf die Photodiodenzeile 6. Die Grundposition ist gegenüber der Situation aus Figur 3 unverändert, soweit die Lage von Punktlaser 4 und Photodiodenzeile 6 gegenüber der Oberfläche 7 nicht ändert. Ein weiterer Teil des Laserlichts 5 wird wiederum unter der Oberfläche 7 reflektiert, nämlich an der Fasermatte 3. Dieser Teil des Laserlichts 5 trifft dann nach Austritt aus dem Rotorblatt 1 an einer zweiten Position 12 auf die Photodiodenzeile 6. Auch in Figur 4 ist keine Auswirkung der Brechung dargestellt. Die zweite Position 12 ist gegenüber der ersten Position 11 verändert. Daher ändert sich auch der Abstand der zweiten Position 12 gegenüber der Grundposition 10. Ist der Abstand größer, so kann auf eine Reflexion geschlossen werden, die tiefer unter der Oberfläche 7 stattgefunden hat. Dies entspricht der in Figur 4 gezeigten Situation.

Je nach Lage des Punktlasers 4 relativ zu einer Verwerfung in der Fasermatte 3 können auch komplexere Reflexionen auftreten, das Laserlicht 5 ganz absorbiert werden oder so reflektiert werden, dass es die Photodiodenzeile 6 nicht mehr erreicht. Um einen Überblick über die Lage der Fasermatte 3 zu erhalten, ist es deshalb zweckmäßig, mehr als nur einen Punkt der Oberfläche 7 zu vermessen. Bevorzugt wird der gesamte Bereich vermessen, in dem Fasermatten 3 vorhanden sind.

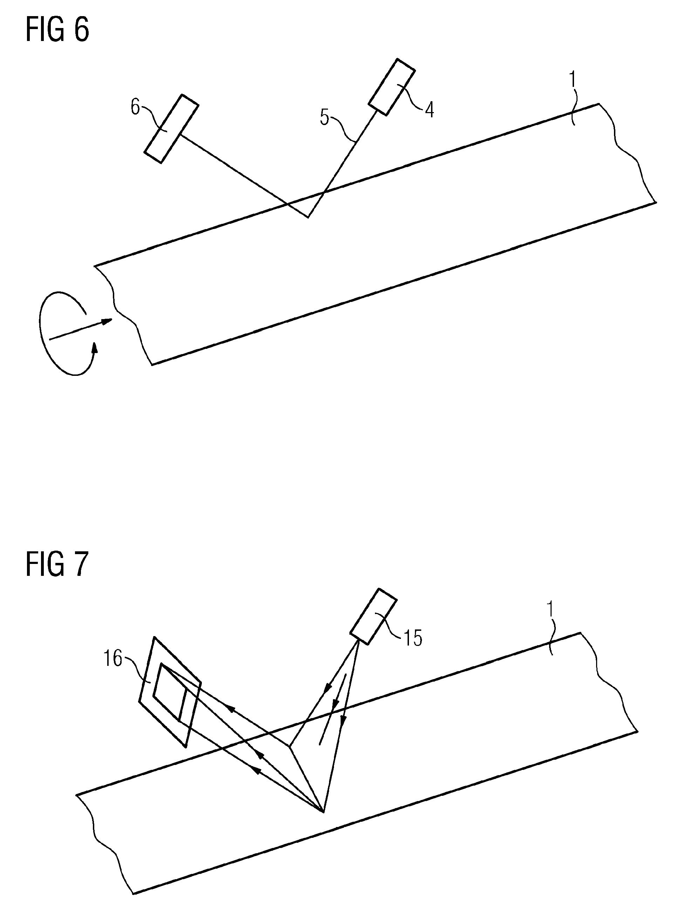

Hierzu ist es zweckmäßig, das Rotorblatt 1 relativ zu dem Punktlaser 4 und der Photodiodenzeile 6 zu bewegen. Dafür gibt es mehrere Möglichkeiten. In einer ersten Ausführungsvariante gemäß Figur 5 kommt eine Verschiebeeinheit zum Einsatz. Diese verschiebt den Punktlaser 4 und die Photodiodenzeile 6 gemeinsam über das Rotorblatt 1 hinweg. Die Verschiebeeinheit umfasst hierzu zweckmäßig Einrichtungen zur Verschiebungen entlang aller drei Achsen. Mit einer Verschiebung in der x-y-Ebene kann die Oberfläche 7 des Rotorblatts 1 überstrichen werden und in der z-Richtung wird der Abstand zur Oberfläche 7 zweckmäßig derart konstant gehalten, dass beispielsweise die Grundposition 10 unverändert bleibt. In einer zweiten Ausführungsvariante führt die Verschiebeeinheit das Rotorblatt 1 selbst, während Punktlaser 4 und Photodiodenzeile 6 ortsfest bleiben. In einer dritten Ausführungsvariante, die in Figur 6 angedeutet ist, wird das Rotorblatt 1 gedreht und dabei entlang einer Achse verschoben, so dass das Überstreichen der Oberfläche 7 analog zu einem Ultraschall-Rollrad-Sensor vonstatten geht.

Es ist klar, dass die Ausführungsvarianten bzgl. des Überstreichens der Oberfläche 7 auch kombinierbar sind. So kann auch bei einer Drehung des Rotorblatts 1 eine gleichzeitige Verschiebung von Punktlaser 4 und Photodiodenzeile 6 erfolgen. Gleichermaßen kann beispielsweise das Rotorblatt 1 in einer Richtung verschoben werden und Photodiodenzeile 6 und Punktlaser 4 realisieren die Verschiebung in den zwei verbleibenden Richtungen.

Ein zweites Ausführungsbeispiel ist in Figur 7 skizziert. Im Gegensatz zum ersten Ausführungsbeispiel wird hierbei statt mit dem Punktlaser 4 mit einem Linienlaser 15 gearbeitet. Dieser erzeugt Laserlicht 5, das sich in einer Ebene ausbreitet. Dadurch wird statt einem Punkt auf dem Rotorblatt 1 eine Linie auf dem Rotorblatt 1 beleuchtet. Die Reflexion diese Linie an der Oberfläche 7 des Rotorblatts 1 resultiert in einer Linie und die Reflexion unter der Oberfläche 7 des Rotorblatts 1 resultiert in weiteren verschobenen Linien oder Punkten. Deshalb ist es zweckmäßig, als Detektor in diesem Fall nicht mehr eine eindimensionale Photodiodenzeile 6 einzusetzen, sondern einen zweidimensional auflösenden Detektor, beispielsweise ein Kamera, beispielsweise in Form eines CCD. Auch im zweiten Ausführungsbeispiel gelten die Verhältnisse für die Positionen 10, 11, 12 wie im Falle des Punktlasers 4. Allerdings werden hier immer mehrere Punkte gleichzeitig beleuchtet und es können mehrere Punkte gleichzeitig betrachtet werden.

Bei dem oben betrachteten ersten Ausführungsbeispiel wurde davon ausgegangen, dass eine merkliche und messbare Reflexion des Laserlichts 5 auch an der Oberfläche 7 selbst erfolgt. In diesem Fall steht für die Auswertung stets die Grundposition 10 zur Verfügung. Es ist deshalb auch nicht unbedingt notwendig, die Anordnung von Rotorblatt 1, Punktlaser 4 und Photodiodenzeile 6 stets gleichzuhalten, da eine Veränderung der Anordnung sich in einer Änderung der Grundposition 10 bemerkbar macht. Findet keine messbare Reflexion an der Oberfläche 7 statt, steht zur Auswertung nur die erste oder zweite Position 11, 12 zur Verfügung. In diesem Fall ist es zweckmäßig, für eine gleichbleibende Anordnung von Rotorblatt 1, Punktlaser 4 und Photodiodenzeile 6 zueinander zu sorgen, um Veränderungen der Positionen 11, 12 durch Veränderungen der Anordnung von solchen zu unterscheiden, die durch die Fasermatte 3 bewirkt werden.

In jedem Fall ergibt eine Auswertung der Positionen des reflektierten Laserlichts 5 bei Überstreichen der Oberfläche 7 des Rotorblatts 1 ein Tiefenprofil für die Fasermatte 3. Das Tiefenprofil wiederum gibt einen direkten Hinweis auf Verwerfungen oder Falten in der Fasermatte 3 und lässt somit einen Rückschluss auf die Qualität und mögliche Lebensdauer des Rotorblatts 1 zu. Ausgehend vom Ergebnis der Messungen kann so beispielsweise entschieden werden, ein Rotorblatt nicht auszuliefern oder anderweitige Maßnahmen zu ergreifen.

## Patentansprüche

1. Vorrichtung zur Überprüfung der Herstellungsqualität für ein Rotorblatt (1) einer Windenergieanlage, aufweisend:
- eine Lichtquelle (4, 15) zur Emission von Licht (5),
- eine positionssensitive Detektionseinrichtung (6, 16) zur Detektion des Lichts (5),
wobei die Detektionseinrichtung (6, 16) außerhalb des Lichtwegs des Lichts (5) angeordnet ist.

2. Vorrichtung gemäß Anspruch 1, bei der die Lichtquelle (4, 15) eine Laserlichtquelle (4, 15) ist.

3. Vorrichtung gemäß Anspruch 1 oder 2, bei der die Lichtquelle (4, 15) eine Linienlichtquelle (15) ist.

4. Vorrichtung gemäß einem der vorangehenden Ansprüche, bei der die Detektionseinrichtung (6, 16) ein Flächensensor (16) ist.

5. Verfahren zur Überprüfung der Herstellungsqualität für ein Rotorblatt (1) einer Windenergieanlage, bei dem
- das Rotorblatt (1) aus einem von der Senkrechten zur Oberfläche verschiedenen Winkel mit Licht (5) bestrahlt wird,
- das vom Rotorblatt (1) reflektierte Licht (5) von einer Detektionseinrichtung (6, 16) aufgenommen wird,
- die Position (11, 12) von unter der Oberfläche (7) des Rotorblatts (1) an einer Fasermatte (3) reflektiertem Licht (5) an der Detektionseinrichtung (6, 16) ermittelt wird,
- aus der Position (11, 12) auf die Lage der Fasermatte (3) geschlossen wird.

6. Verfahren gemäß Anspruch 5, bei dem ein Vergleich der Position (11, 12) mit einer Grundposition (10) durchgeführt wird, wobei die Grundposition (10) die Position von direkt an der Oberfläche (7) des Rotorblatts (1) reflektiertem Licht (5) an der Detektionseinrichtung (6, 16) ist.

7. Verfahren gemäß Anspruch 5 oder 6, bei dem als Licht (5) Laserlicht (5) verwendet wird.
